# EUROPÄISCHE PATENTSCHRIFT

(11) **EP 0 927 212 B1**
(45) Veröffentlichungstag und Bekanntmachung des Hinweises auf die Patenterteilung: **28.06.2000**
(21) Anmeldenummer: 97943850.4
(22) Anmeldetag: 19.09.1997
(51) Int. Cl.: C08G 18/42

(54) **BIOLOGISCH ABBAUBARE POLYESTER**
BIODEGRADABLE POLYESTERS
POLYESTERS BIODEGRADABLES

(30) Priorität: 20.09.1996 DE 19638488
(43) Veröffentlichungstag der Anmeldung: 07.07.1999
(73) Patentinhaber: BASF AKTIENGESELLSCHAFT, 67056 Ludwigshafen (DE)
(72) Erfinder: KOWITZ, Christoph, D-69469 Weinheim (DE); BAUER, Peter, D-67071 Ludwigshafen (DE); BEIMBORN, Dieter, Bernhard, D-67273 Weisenheim (DE); BRUCHMANN, Bernd, D-67251 Freinsheim (DE); FALLER, Uwe, D-67227 Frankenthal (DE); LAUN, Martin, D-67061 Ludwigshafen (DE); PAGGA, Udo, D-67069 Ludwigshafen (DE); PIPPER, Gunter, D-67098 Bad Dürkheim (DE); WARZELHAN, Volker, D-67273 Weisenheim (DE)
(86) Internationale Anmeldenummer: EP9704908
(87) Internationale Veröffentlichungsnummer: WO9812242

(56) Entgegenhaltungen:
- EP-A- 0 572 256
- DE-A- 4 440 836
- DE-A- 4 440 858
- US-A- 5 484 861

## Beschreibung

Die vorliegende Erfindung betrifft biologisch abbaubare Polyester, die aus
A) 95 bis 99,99 mol-% mindestens eines Polyesters, enthaltend als monomere Bausteine
   a₁) eine Mischung aus
      a₁₁) 20 bis 95 mol-% mindestens einer aliphatischen oder cycloaliphatischen Dicarbonsäure oder deren esterbildendem Derivat und
      a₁₂) 5 bis 80 mol-% mindestens einer aromatischen Dicarbonsäure oder deren esterbildendem Derivat und
   a₂) mindestens eine Dihydroxyverbindung oder mindestens ein Aminoalkohol oder deren Mischungen
      und
B) 0,01 bis 5 mol-% einer Mischung, enthaltend
   b₁) 45 bis 80 Gew.-% mindestens einer einkernigen Isocyanurates (b₁₁) oder mindestens einer Verbindung (b₁₂), die zwei funktionelle Gruppen enthält, die mit den Endgruppen des Polyesters A reagieren können oder Mischungen aus b₁₁ und b₁₂,
   b₂) 13 bis 25 Gew.-% mindestens eines zweikernigen Isocyanurates (b₂₁) oder mindestens einer Verbindung (b₂₂), die drei funktionelle Gruppen enthält, die mit den Endgruppen des Polyesters A reagieren können oder Mischungen aus b₂₁ und b₂₂,
   b₃) 5 bis 12 Gew.-% mindestens eines dreikernigen Isocyanurates (b₃₁) oder mindestens einer Verbindung (b₃₂), die vier funktionelle Gruppen enthält, die mit den Endgruppen des Polyesters A reagieren können oder Mischungen aus b₃₁ und b₃₂ und
   b₄) 2 bis 18 Gew.-% mindestens eines vier- oder höherkernigen Isocyanurates (b₄₁) oder Mischungen unterschiedlicher Isocyanurate (b₄₁)
erhältlich sind. Ferner betrifft die vorliegende Erfindung Formmassen, die die biologisch abbaubaren Polyester enthalten, Verfahren zur Herstellung der biologisch abbaubaren Polyester sowie deren Verwendung zur Herstellung von Formkörpern, Folien oder Fasern. Darüberhinaus betrifft die Erfindung die Formkörper, Folien oder Fasern, die unter Verwendung der biologisch abbaubaren Polyester hergestellt sind.

Biologisch abbaubare Polyester, die wiederkehrende Einheiten enthalten, die sich von einer Mischung aromatischer und aliphatischer Dicarbonsäuren oder deren Derivaten ableiten, sind beispielsweise aus der US 5,446,079 bekannt. Dort werden lineare, statistische, semikristalline Polyester mit einer Grenzviskosität von ungefähr 0,5 bis 1,8 dl/g (gemessen in Phenol/Tetrachlorethan, Gew.-Verhältnis 60/40, bei einer Konzentration von 0,5g/100 ml und einer Temperatur von 25 °C) beschrieben, wobei die Dicarbonsäuremischung von 5 bis 65 mol-% aliphatische und 35 bis 95 mol-% aromatische Dicarbonsäuren enthält.

Kettenverlängerte oder verzweigte Polyester sind ebenfalls bekannt. Bekannt sind daneben auch Polyester, die sowohl verzweigt als auch kettenverlängert sind. Häufig werden Diisocyanate verwendet, um die Ketten zu verlängern und als Verzweigungsmittel werden oft mehrfunktionelle Säuren und/oder Alkohole eingesetzt. Isocyanate höherer Funktionalität, Polyisocyanate, dienen im Allgemeinen als Vernetzer. Um Formkörper mit dicken Wänden herzustellen, wird in der US 3,553,157 empfohlen, Polyisocyanate vor dem Verarbeiten auf Polyethylentherephtalat (PET) aufzutrommeln, sodaß das PET beim Verarbeiten vernetzt. Die auf diese Weise hergestellten Formteile sind aber nicht frei von Stippen; die Oberflächenqualität läßt also zu wünschen übrig. In der US 2,999,851 werden beispielsweise lineare mit Diisocyanaten kettenverlängerte Polyester beschrieben, die mit Polyisocyanaten vernetzt werden können. So modifizierte Polyester lassen sich insbesondere gut vermahlen. Sie können jedoch nicht thermoplastisch verarbeitet werden und eignen sich auch nicht, um Polymerblends herzustellen. Aus der WO 89/11497 sind Polyester aus cycloaliphatischen und aromatischen Monomeren bekannt, die in einem ersten Schritt verzweigt und in einem weiteren Schritt mit Polyisocyanaten umgesetzt werden. Diese Polyester können zu Filmen verarbeitet werden. Jedoch wirkt sich nachteilig aus, daß diese Polyester keine Thermoplaste sind. Die Filme müssen daher durch Walzen hergestellt werden. Die Herstellung von Folien durch Blasformen ist mit diesen Polyestern nicht zufriedenstellend möglich. Klebstoffe aus mit Diisocyanaten kettenverlängerten und mit Polyisocyanaten vernetzten aliphatisch-aromatischen Polyestern sind der US 3,804,810 zu entnehmen.

Biologisch abbaubare Folien sind gemäß der EP-A1-572 682 aus aliphatischen Polyestern, die beispielsweise mit Pyromellitsäuredianhydrid verzweigt und Polyisocyanaten kettenverlängert wurden, zugänglich. Aliphatisch-aromatische Polyester, die mit Diisocyanaten kettenverlängert sind und die biologisch abgebaut werden können, sind der DE-A1-44 40 858 zu entnehmen.

Die bislang bekannten biologisch abbaubaren Polyester genügen noch nicht allen Anforderungen, insbesondere bei der Herstellung von Folien. Die aliphatischen Polyester, obwohl kettenverlängert und verzweigt, neigen dazu zu verkleben. Darüberhinaus haben sie den Nachteil, daß ihre Schmelzpunkte zu niedrig sind und sie deshalb nicht hinreichend wärmeformbeständig sind. Bernsteinsäure kann zwar eingesetzt werden, um die Schmelzpunkte zu erhöhen. Diese Dicarbonsäure ist aber für Massenproduktproduktion zu teuer. Die mit Diisocyanaten kettenverlängerten, linearen, aliphatisch-aromatischen Polyester können besser zu Folien verarbeitet werden als die entsprechenden nicht-kettenverlängerten. Allerdings bilden sie Gelpartikel aus, die sich insbesondere bei hohen Cycluszeiten bei der Verarbeitung störend auswirken.

Aufgabe der vorliegenden Erfindung war es deshalb, biologisch abbaubare aromatisch-aliphatische Polyester zu entwickeln, die sich zu Folien verarbeiten lassen, die nicht klebrig sind und eine gute Oberflächenqualität aufweisen. Des Weiteren sollten aromatisch-aliphatische Polyester zur Verfügung gestellt werden, deren mechanische Eigenschaften Polyestern mit hohem Anteil an aromatischen Einheiten ähneln, deren Abbaubarkeit jedoch Polyestern mit hohen Anteilen an aliphatischen Einheiten gleicht. Insbesondere sollten die neuen Polyester hohe bis sehr hohe Cycluszeiten bei der Verarbeitung, auch bei der Herstellung von Formkörpern, beispielsweise mittels Spritzguß, ermöglichen. Darüberhinaus sollte ein Material gefunden werden, das sich zu biologisch abbaubaren Fäden verarbeiten läßt. Ferner sollten biologisch abbaubare Polyester zur Verfügung gestellt werden, die sich mit anderen Materialen, insbesondere solchen, die selbst biologisch abbaubar sind, zu Formmassen verarbeiten lassen.

Demgemäß wurden die eingangs genannten Polyester gefunden.

Der Begriff "biologisch abbaubar", wie er im Rahmen der vorliegenden Anmeldung verwendet wird, bezeichnet die Tatsache, daß die Polyester unter Umwelteinflüssen in einer angemessenen und nachweisbaren Zeitspanne zerfallen. Dabei erfolgt der Abbau in der Regel hydrolytisch und/oder oxidativ, zum überwiegenden Teil jedoch durch Einwirkung von Mikroorganismen wie Bakterien, Hefen, Pilzen und Algen. Der Abbau kann jedoch auch enzymatisch erfolgen, wie z.B. von Y. Tokiwa und T. Suzuki in "Nature", Bd. 270, S. 76-78, 1977, beschrieben. Dabei ist es im Rahmen der vorliegenden Erfindung durch eine entsprechende Wahl des Verhältnisses zwischen wiederkehrenden Einheiten, die sich von aliphatischen Carbonsäuren, bzw. deren esterbildenden Derivaten herleiten, und solchen, die sich von aromatischen Carbonsäuren, bzw. deren esterbildenden Derivaten herleiten, möglich, die Geschwindigkeit des biologischen Abbaus, d.h. den Zeitpunkt, bis zu dem die erfindungsgemäßen Polyester im wesentlichen vollständig abgebaut sind, zu variieren. Dabei gilt als Faustregel, daß die Polyester umso schneller biologisch abbaubar sind, je höher der Anteil an wiederkehrenden Einheiten, die sich von aliphatischen Carbonsäuren, bzw. deren esterbildenden Derivaten herleiten, ist. Ferner sind die Polyester umso schneller biologisch abbaubar, je höher der Anteil an Abschnitten mit alternierender Abfolge von wiederkehrenden Einheiten, die sich von aliphatischen und aromatischen Carbonsäure, bzw. deren esterbildenden Derivaten ableiten, ist.

### Polyester A

Erfindungsgemäß enthalten die Polyester A eine Mischung a₁ aus den Dicarbonsäuren a₁₁ und a₁₂ und Dihydroxyverbindungen a₂.

Die erfindungsgemäß zur Herstellung der Polyester A geeigneten aliphatischen Dicarbonsäuren a₁₁ haben im Allgemeinen 2 bis 10 Kohlenstoffatome, vorzugsweise 4 bis 6 Kohlenstoffatome. Sie können sowohl linear als auch verzweigt sein. Die im Rahmen der vorliegenden Erfindung verwendbaren cycloaliphatischen Dicarbonsäuren a₁₁ sind in der Regel solche mit 7 bis 10 Kohlenstoffatomen und insbesondere solche mit 8 Kohlenstoffatomen. Prinzipiell können jedoch auch Dicarbonsäuren a₁₁ mit einer größeren Anzahl an Kohlenstoffatomen, beispielsweise mit bis zu 30 Kohlenstoffatomen, eingesetzt werden.

Beispielhaft zu nennen sind: Malonsäure, Bernsteinsäure, Glutarsäure, Adipinsäure, Pimelinsäure, Acelainsäure, Sebacinsäure, Fumarsäure, 2,2-Dimethylglutarsäure, Suberinsäure, 1,3-Cyclopentandicarbonsäure, 1,4-Cyclohexandicarbonsäure, 1,3-Cyclohexandicarbonsäure, Diglykolsäure, Itaconsäure, Maleinsäure und 2,5-Norbornandicarbonsäure, worunter Adipinsäure oder Sebacinsäure bevorzugt ist.

Als esterbildende Derivate der oben genannten aliphatischen oder cycloaliphatischen Dicarbonsäuren a₁₁ sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren a₁₁ können ebenfalls eingesetzt werden.

Dabei können die Dicarbonsäuren oder deren esterbildenden Derivate, a₁₁ einzeln oder als Gemisch aus zwei oder mehr davon eingesetzt werden.

Vorzugsweise werden Adipinsäure oder deren esterbildende Derivate alleine oder Sebacinsäure oder deren esterbildende Derivate alleine oder Mischungen aus Adipinsäure und Sebacinsäure bzw. deren esterbildenden Derivaten, insbesondere Adipinsäure oder deren esterbildende Derivate alleine, eingesetzt.

Der Anteil der aliphatischen bzw. cycloaliphatischen Dicarbonsäure oder deren esterbildenden Derivaten, a₁₁, beträgt erfindungsgemäß von 20 bis 95, bevorzugt von 30 bis 70, besonders bevorzugt von 40 bis 65, insbesondere von 50 bis 60 mol-%, jeweils bezogen auf die Gesamtmenge der Komponenten a₁₁ und a₁₂.

Als aromatische Dicarbonsäure a12 sind im Allgemeinen solche mit 8 bis 12 Kohlenstoffatomen und vorzugsweise solche mit 8 Kohlenstoffatomen zu nennen. Beispielhaft erwähnt seien Terephthalsäure, Isophthalsäure, 2,6-Naphthoesäure und 1,5-Naphthoesäure sowie esterbildende Derivate davon. Dabei sind insbesondere die Di-C₁-C₆-Alkylester, z.B. Dimethyl-, Diethyl-, Di-n-propyl-, Di-iso-propyl, Di-n-butyl-, Di-iso-butyl, Di-t-butyl, Di-n-pentyl-, Di-iso-pentyl oder Di-n-hexylester zu nennen. Die Anhydride der Dicarbonsäuren a₁₂ sind ebenso geeignete esterbildende Derivate. Darunter wird Terephthalsäure oder deren esterbildende Derivate, insbesondere der Dimethylester oder deren Mischungen bevorzugt.

Prinzipiell können jedoch auch aromatische Dicarbonsäuren a₁₂ mit einer größeren Anzahl an Kohlenstoffatomen, beispielsweise bis zu 20 Kohlenstoffatomen, eingesetzt werden.

Die aromatischen Dicarbonsäuren oder deren esterbildende Derivate a₁₂ können einzeln oder als Gemisch aus zwei oder mehr davon eingesetzt werden.

Der Anteil der aromatischen Dicarbonsäuren oder deren esterbildenden Derivaten a₁₂ beträgt erfindungsgemäß von 5 bis 80, bevorzugt von 30 bis 70, besonders bevorzugt von 35 bis 60, insbesondere von 40 bis 50 mol-%, jeweils bezogen auf die Gesamtmenge der Komponenten a₁₁ und a₁₂.

Als Komponente a₂ werden erfindungsgemäß mindestens eine Dihydroxyverbindung oder mindestens ein Aminoalkohol oder deren Mischungen eingesetzt. Prinzipiell sind alle Diole oder Aminoalkohole verwendbar, die mit den Dicarbonsäuren a₁₁ oder a₁₂ Ester bilden können.

Im Allgemeinen werden jedoch als Komponente a₂ verzweigte oder lineare Alkandiole mit 2 bis 12 Kohlenstoffatomen, bevorzugt 4 bis 6 Kohlenstoffatomen, oder Cycloalkandiole mit 5 bis 10 Kohlenstoffatomen, a₂₂ Polyetherdiole, d.h. Ethergruppen enthaltende Dihydroxyverbindungen oder Aminoalkohole mit 2 bis 12 Kohlenstoffatomen, vorzugsweise 2 bis 4 Kohlenstoffatomen, sowie Aminocycloalkohole mit 5 bis 10 Kohlenstoffatomen eingesetzt.

Beispiele geeigneter Alkandiole sind Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl- 1,3-propandiol, 2-Ethyl-2-butyl-1,3-propandiol, 2-Ethyl-2-isobutyl-1,3-propandiol, 2,2,4-Trimethyl-1,6-hexandiol, insbesondere Ethylenglykol, 1,3-Propandiol, 1,4-Butandiol oder 2,2-Dimethyl-1,3-propandiol (Neopentylglykol); Cyclopentandiol, 1,4-Cyclohexandiol, 1,2-Cyclohexandimethanol, 1,3-Cyclohexandimethanol, 1,4-Cyclohexandimethanol oder 2,2,4,4-Tetramethyl-1,3-cyclobutandiol. Es können auch Mischungen unterschiedlicher Alkandiole verwendet werden.

Beispiele für Polyetherdiole sind Diethylenglykol, Triethylenglykol, Polyethylenglykol, Polypropylenglykol, Polytetrahydrofuran, insbesondere Diethylenglykol, Triethylenglykol, Polyethylenglykol, oder deren Gemische, oder Verbindungen, die eine unterschiedliche Anzahl von Ethereinheiten aufweisen, beispielsweise Polyethylenglykol, das Propyleneinheiten enthält und beispielsweise durch Polymerisation nach an sich bekannten Methoden von zuerst Ethylenoxid und anschließend Propylenoxid erhalten werden kann. Das Molekulargewicht (Mn) der einsetzbaren Polyethylenglykole beträgt in der Regel ungefähr 250 bis ungefähr 8000, vorzugsweise ungefähr 600 bis ungefähr 3000 g/mol. Mischungen unterschiedlicher Polyetherdiole können ebenfalls verwendet werden.

4-Aminomethylcyclohexanmethanol, 2-Aminoethanol, 3-Aminopropanol, 4-Aminobutanol, 5-Aminopentanol, 6-Aminohexanol; Aminocyclopentanol und Aminocyclohexanol, oder deren Mischungen sind Beispiele für Aminoalkohole, die als Komponente a₂ eingesetzt werden können. Ebenso können Mischungen unterschiedlicher Aminoalkohole eingesetzt werden.

Das Molverhältnis von a₁ zu a₂ wird im Allgemeinen im Bereich von 0,4:1 bis 2,5:1, vorzugsweise im Bereich von 0,5:1 bis 1,5:1, weiter bevorzugt im Bereich von 0,5:1 bis 1,2:1 und insbesondere im Bereich von 0,8:1 bis 1,1:1, gewählt.

Bevorzugte Polyester A enthalten die monomeren Bausteine a₁ und a₂. Das Molverhältnis von a₁ und a₂ im isolierten Polyester A ist nach dem Entfernen der gewünschten Menge an überschüssiger Komponente a₂ im Allgemeinen ungefähr 0,8:1 bis etwa 1:1, bevorzugt von 0,9 bis 1:1, besonders bevorzugt von 0,95 bis 1:1. Bevorzugt enthalten die Polyester A Hydroxy- und/oder Aminoendgruppen, d.h. a₁:a₂ ist etwas kleiner als 1.

Im Allgemeinen ist der Polyester A im Wesentlichen linear und sein Molekulargewicht (Gewichtsmittelwert Mw) liegt in der Regel im Bereich von 5000 bis 120 000 g/mol, bevorzugt im Bereich von 20 000 bis 80 000 g/mol, bestimmt mittels Gelpermeationschromatographie unter Verwendung von engverteilten Polystyrolstandards in Tetrahydrofuran als Lösungsmittel. Die Polydispersität (PDI = M_{w}/Mₙ) der Polyester A liegt in der Regel im Bereich von 2 bis 4, bevorzugt von 2,5 bis 3,5.

### Komponente B

Die Mischung B enthält gemäß der Erfindung eine Komponente b₁ in Anteilen von 45 bis 80, bevorzugt von 50 bis 75, beispielsweise von 55 bis 70 Gew.-%, bezogen auf das Gesamtgewicht der Mischung B. Als weitere Komponente enthält die Mischung B erfindungsgemäß von 13 bis 25, bevorzugt von 15 bis 23, insbesondere von 16 bis 20 Gew.-%, bezogen auf das Gesamtgewicht der Mischung B, einer Komponente b₂. Die Komponente b₃ ist in der Mischung B in einem Anteil von 5 bis 12, bevorzugt von 5 bis 11 Gew.-%, bezogen auf das Gesamtgewicht der Mischung B, enthalten. Beispielsweise kann B von 6 bis 10 Gew.-%, bezogen auf das Gesamtgewicht der Mischung B, an b₃ enthalten. Neben den Komponenten B1 und b₃ enthält die Mischung B von 2 bis 18, bevorzugt von 5 bis 16 Gew.-%, bezogen auf das Gesamtgewicht der Mischung B, der Komponente b₄. Nach einer bevorzugten Ausführungsform enthält B von 8 bis 15 Gew.-%, bezogen auf das Gesamtgewicht der Mischung B, der Komponente b₄.

Die Komponenten b₁ bis b₄ setzen sich jeweils aus mindestens einem Isocyanurat oder mindestens einer Verbindung, mit gegenüber den Endgruppen des Polyesters A reaktiven Gruppen oder deren Mischungen zusammen. Die Komponenten b₁ bis b₄ unterscheiden sich dadurch, daß die Isocyanurate b₁₁ bis b₄₁ eine unterschiedliche Anzahl der Kerne, die die Anzahl der Cyanuratringe im Molekül angibt, aufweisen. Die Komponente b₁ kann erfindungsgemäß einkernige, b₂ zweikernige, b₃ dreikernige und b₄ vier- oder höherkernige Isocyanurate enthalten. Dabei können die Isocyanurate b₁₁ bis b₄₁ in allen Komponenten b₁ bis b₄ jeweils den gleichen Grundkörper haben. Die Isocyanurate in den Komponenten b₁ bis b₄ können aber auch unabhängig voneinander unterschiedliche Grundkörper aufweisen. Ferner unterscheiden sich b₁ bis b₄ durch die Anzahl der funktionellen Gruppen in den reaktiven Verbindungen b₁₂ bis b₄₂. Dabei kann das Grundmolekül dieser Verbindung in den vier Komponenten b₁ bis b₄ gleich oder unabhängig voneinander verschieden voneinander sein.

In einer bevorzugten Ausführungsform werden in den Komponenten b₁ bis b₄ die Isocyanurate b₁₁ bis b₄₁ alleine eingesetzt. Zu den bevorzugten Isocyanuraten zählen die aliphatischen Isocyanurate, wie Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat, ableiten. Dabei können die Alkylendiisocyanate sowohl linear als auch verzweigt sein. Besonders bevorzugt werden Diisocyanurate, die auf n-Hexamethylendiisocyanat basieren.

Als Komponente B kommen aber z.B. auch Mischungen in Betracht, die difunktionelle, trifunktionelle und tetrafunktionelle Epoxide b₁₂ bis b₃₂ enthalten. Bisphenol A-Diglycidylether ist ein Beispiel eines geeigneten difunktionellen Epoxids. Als trifunktionelle Epoxide kommen 1,3,5-Tris-oxiranylmethyl-[1,3,5]triazinan-2,4,6-trioxan, 2,4,6-Tris-oxiranyl [1,3,5]trioxan, Benzol-1,3,5-tricarboxylsäure-tris-oxiranylmethylester oder 1,1,1-Tris(hydroxymethyl)ethan-tris(glycidylether) 1,1,1-Tris(hydroxymethyl)propan-tris(glycidylether) in Betracht. 4,4'-Methylenbis[N,N-bis(2,3-epoxypropoyl)anilin] oder Pentaerythritoltetraglycidylether kann als vierfunktionelles Epoxid eingesetzt werden.

Die Mischung B, die gemäß einer bevorzugten Ausführungsform nur Isocyanurate enthält, weist im Allgemeinen eine Viskosität von 100 bis 20000 mPas auf. Darunter bevorzugte Mischungen B haben Viskositäten im Bereich von 500 bis 15000 mPas. Zu den besonders bevorzugten Mischungen dieser Art zählen Mischungen, die Viskositäten im Bereich von 2000 bis 6000 mPas aufweisen. Jedoch kommen auch Mischungen in Betracht, die niedrigere Viskositäten haben, beispielsweise im Bereich von 500 bis 1000. Ferner ist es möglich beispielsweise Mischungen zu verwenden, deren Viskositäten im Bereich von 9000 bis 13000 liegen. Die Viskositätsangaben beziehen sich jeweils auf Messungen bei 23°C gemäß DIN 53 019.

Neben den Isocyanatgruppen und den funktionellen Gruppen der Verbindungen b₁₂ bis b₄₂ können die Mischungen B auch noch geringe Mengen im Allgemeinen nicht mehr als 5 Gew.-%, bezogen auf die Summe der Komponenten b₁ bis b₄ an weiteren Verbindungen mit Allophanatgruppen oder Urethiongruppen, enthalten.

Im Allgemeinen werden die Mischungen B dadurch hergestellt, daß man aliphatische Diisocyanate katalytisch oligomerisiert. Als Katalysatoren können beispielsweise Hydroxide oder organische Salze von schwachen Säuren mit Tetraalkylammonium-Gruppen, Hydroxide oder organische Salze von schwachen Säuren mit Hydroxyalkylammonium-Gruppen, Alkalimetallsalze oder Zinn-, Zink- bzw. Bleisalze von Alkylcarbonsäuren eingesetzt werden. Des Weiteren kommen als Katalysatoren Alkalialkoholate, -phenolate, Metallsalze von Carbonsäuren, beispielsweise Kobaltnaphthenat, Natriumbenzoat, Natriumacetat und Kaliumformiat, tertiäre Amine, beispielsweise Triethylamin, N,N-Dimechylbenzylamin, Triethylendiamin, Tris-2,4,6-(dimethylaminomethyl)-phenol, Tris-1,3,5-(dimethylaminopropyl)-S-hexahydrotriazin, tertiäre Phosphine oder tertiäre Ammoniumverbindungen in Betracht.

Hierbei läßt man die aliphatischen und/oder cycloaliphatischen Diisocyanate in Gegenwart des Katalysators, gegebenenfalls unter Verwendung von Lösungsmitteln und/oder Hilfsstoffen, bis zum Erreichen des gewünschten Umsatzes reagieren. Im Allgemeinen wird die Reaktion bei Temperaturen im Bereich von 60 bis 100°C ausgeführt. Danach wird die Reaktion durch Desaktivierung des Katalysators abgebrochen und das überschüssige monomere Diisocyanat abdestilliert. Der Katalysator kann durch Zugabe einer aliphatischen Carbonsäure, z.B. Oxalsäure oder Ethylhexansäure oder durch Erhitzen der Reaktionsmischung auf Temperaturen über 100°C desaktiviert werden. Je nach dem verwendeten Katalysatortyp und der Reaktionstemperatur erhält man Polyisocyanate mit unterschiedlichen Anteilen an Isocyanurat- bzw. Uretdiongruppen.

Derartige Verfahren sind an sich bekannt, wie z.B. aus den DE-A 43 20 821 und 44 05 055 hervorgeht.

Die so hergestellten Produkte sind meist klare, aber in Abhängigkeit vom Katalysatortyp, der Diisocyanatqualität, der Reaktionstemperatur und der Reaktionsfahrweise mehr oder weniger stark gelbgefärbte Produkte.

Die erfindungsgemäßen biologisch abbaubaren Polyester sind verzweigt und wenn überhaupt dann nur in untergeordnetem Maße vernetzt. Die erfindungsgemäßen Polyester haben im allgemeinen Molekulargewichte (Gewichtsmittelwert Mw) im Bereich von 60.000 bis 250.000 g/mol, beispielsweise im Bereich von 70.000 bis 200.000 g/mol. Abhängig zum gewünschten Eigenschaftsprofil können die Molekulargewichte (Gewichtsmittelwert Mw) z.B. im niedrigeren Bereich, beispielsweise im Bereich von 60.000 bis 140.000, bevorzugt im Bereich von 80.000 bis 110.000 g/mol liegen. Sie können aber auch im höher molekularen Bereich liegen, beispielsweise nach einer bevorzugten Ausführungsform im Bereich von 180.000 bis 200.000 g/mol (Gewichtsmittelwert Mw). Nach einer weiteren bevorzugten Ausführungsform haben die erfindungsgemäßen Polyester Molekulargewichte (Gewichtsmittelwert Mw) im Bereich von 150.000 bis 160.000 g/mol. Die Molekulargewichte werden mittels Gelpermeationschromatographie (engverteilte Polystyrolstandarts und Tetrahydrofuran als Lösungsmittel) bestimmt. Ihr Polydisperitätsindex (PDI =M_{w}/Mₙ) liegt im Bereich von 2 bis 9, bevorzugt 3 bis 7.

Die erfindungsgemäßen biologisch abbaubaren Polyester können ohne weitere Zusatzstoffe verwendet werden oder als Formmassen, gemischt mit entsprechenden Additiven, eingesetzt werden.

Bezogen auf die erfindungsgemäßen biologisch abbaubaren Polyester können von 0 bis 80 Gew.-% Additive zugesetzt sein. Geeignete Füllstoffe sind beispielsweise Ruß, Stärke, Ligninpulver, Cellulosefasern, Naturfasern wie Sisal und Hanf, Eisenoxide, Tonmineralien, Talkum, Erze, Calciumcarbonat, Calciumsulfat, Bariumsulfat und Titandioxid. Die Additive können zum Teil auch Stabilisatoren wie Tocopherol (Vitamin E), organische Phosphorverbindungen, Mono-, Di- und Polyphenole, Hydrochinone, Diarylamine, Thioether, UV-Stabilisatoren, Nukleierungsmittel wie Talkum sowie Gleit- und Formtrennmittel auf Basis von Kohlenwasserstoffen, Fettalkoholen, höheren Carbonsäuren, Metallsalzen höherer Carbonsäuren wie Calcium- und Zinkstearat, und Montanwachsen enthalten. Solche Stabilisatoren sind in Kunststoff-Handbuch, Bd. 3/1, Carl Hanser Verlag, München, 1992, S. 24 bis 28 ausführlich beschrieben.

Die erfindungsgemäßen biologisch abbaubaren Polyester können außerdem durch den Zusatz von organischen oder anorganischen Farbstoffen beliebig eingefärbt werden. Die Farbstoffe können im weitesten Sinne auch als Additive angesehen werden.

Je nach gewünschtem Anwendungsgebiet können die erfindungsgemäßen biologisch abbaubaren Polyester mit thermoplastisch verarbeitbaren Polymeren oder weiteren Polymeren gemischt werden, die selbst biologisch abbaubar sind.

Bevorzugte thermoplastische Polymere, mit denen die erfindungsgemäßen biologisch abbaubaren Polyester zu Formmassen verarbeitet werden können, sind solche, mit denen die erfindungsgemäßen biologisch abbaubaren Polyester verträglich sind. Hierzu zählen vor allem Polycarbonate, Polyacrylate oder Polymethylacrylate, bevorzugt Polymethylmethacrylat oder Polyvinylacetat.

Die erfindungsgemäßen biologisch abbaubaren Polyester können beispielsweise mit Celluloseverbindungen wie Celluloseestern, insbesondere Cellulosealkylestern, wie Celluloseacetat, Cellulosepropionat, Cellulosebutyrat oder gemischten Celluloseestern, z.B. Celluloseacetatbutyrat oder Cellulosepropionatbutyrat zu Formmassen verarbeitet werden.

Darüberhinaus ist es möglich, die erfindungsgemäßen biologisch abbaubaren Polyester in Mischung mit weiteren Polyestern einzusetzen, die selbst biologisch abbaubar sind, beispielsweise den linearen aliphatisch-aromatischen Copolyestern wie sie aus der US 5,446,079 bekannt sind oder den aliphatisch-aromatischen Polyestern, die in der DE-A1-44 40 858 beschrieben sind.

Darüberhinaus können Formmassen, die die biologisch abbaubaren Polyester gemäß der Erfindung sowie biologisch abbaubare aliphatische Polyester enthalten, hergestellt werden. Zu den als Blendkomponente verwendbaren biologisch abbaubaren aliphatischen Polyestern zählen sowohl lineare, nicht-kettenverlängerte aliphatische Polyester als auch solche die kettenverlängert und/ oder verzweigt sind. Besonders bevorzugt werden aliphatische Polyester wie Polyhydroxybutyrat, Copolymere auf der Basis von Polyhydroxybutyrat und Polyhydroxyvalerat, Polyhexamethylenglutarat, Polyhexamethylenadipat, Polybutylenadipat, Polybutylensuccinat, Polyethylenadipat, Polyethylenglutarat, Polydiethylenadipat, Polydiethylensuccinat oder Polyhexamethylensuccinat. Zu den bevorzugten Blendkomponenten zählen auch die eingangs erwähnten, in der EP-A1-572 682 offenbarten, verzweigten und kettenverlängerten aliphatischen Polyester.

Des Weiteren können die erfindungsgemäßen biologisch abbaubaren Polyester mit Stärke, bevorzugt modifizierter Stärke, insbesondere thermoplastisch verarbeitbarer Stärke oder Stärkeverbindungen wie Stärkeether oder Stärkeester gemischt werden.

Selbstverständlich können die Formmassen, auf der Basis der biologisch abbaubaren erfindungsgemäßen Polyester sowie den thermoplastisch verarbeitbaren oder anderen biologisch abbaubaren Polymeren, Additive wie die bereits oben genannten Füllstoffe, Farbstoffe, Stabilisatoren oder Verarbeitungshilfsmittel in den genannten Mengen enthalten. Ferner können diese Formmassen noch falls erforderlich Zusätze enthalten, wie sie für Polymerblends typisch sind, beispielsweise Verträglichkeitsvermittler.

Gemäß der Erfindung sind die biologisch abbaubaren Polyester dadurch erhältlich, daß in einem ersten Schritt die Polyester A hergestellt und in einem zweiten Schritt von 95 bis 99,99, bevorzugt von 97 bis 99,95, besonders bevorzugt von 99,0 bis 99,90 mol% der Polyester A mit von 0,01 bis 5, bevorzugt von 0,02 bis 3, besonders bevorzugt von 0,03 bis 1,5 mol-%, insbesondere von 0,05 bis 1,0 mol-% der Mischung B umgesetzt werden, wobei sich die Angabe Mol-% auf die Summe der Komponenten A und B bezieht.

Verfahren zur Herstellung der Polyester A sind grundsätzlich bekannt (Sorensen und Campbell, "Preparative Methods of Polymer Chemistry", Interscience Publishers, Inc., New York, 1961, Seiten 111 bis 127; Encyl. of Polym. Science and Eng., Bd. 12, 2. Ed., John Wiley & Sons, 1988, S. 1 bis 75; Kunststoff-Handbuch, Band 3/1, Carl Hanser Verlag, München, 1992, S. 15 bis 23 (Herstellung von Polyestern); WO 92/13019; EP-A 568,593; EP-A 565,235; EP-A 28,687), so daß sich nähere Angaben hierüber erübrigen.

So kann man beispielsweise die Umsetzung von Dimethylestern der Komponente a₁ mit der Komponente a₂ ("Umesterung") bei Temperaturen im Bereich von 160 bis 230°C in der Schmelze bei Atmosphärendruck vorteilhaft unter Inertgasatmosphäre durchführen.

Vorteilhaft wird bei der Herstellung des Polyesters A ein molarer Überschuß der Komponente a₂, bezogen auf die Komponente a₁, verwendet, beispielsweise bis zum 2,5-fachen, bevorzugt bis zum 1,7-fachen.

Bei Verwendung von Dicarbonsäuren oder deren Anhydriden als Komponente a₁ kann deren Veresterung mit Komponente a₂ vor, gleichzeitig oder nach der Umesterung stattfinden. In einer bevorzugten Ausführungsform verwendet man das in der DE-A 23 36 026 beschriebene Verfahren zur Herstellung modifizierter Polyalkylenterephthalate.

Nach der Umsetzung der Komponenten a₁ und a₂ und gewünschtenfalls a₃ wird in der Regel unter vermindertem Druck oder in einem Inertgasstrom, beispielsweise aus Stickstoff, bei weiterem Erhitzen auf eine Temperatur im Bereich von 180 bis 260°C die Polykondensation bis zum gewünschten Molekulargewicht durchgeführt.

Um unerwünschte Abbau- und/oder Nebenreaktionen zu vermeiden, kann man in dieser Verfahrensstufe gewünschtenfalls auch Stabilisatoren zusetzen. Solche Stabilisatoren sind beispielsweise die in der EP-A 13 461, US 4,328,049 oder in B. Fortunato et al., Polymer Vol. 35, Nr. 18, S. 4006 bis 4010, 1994, Butterworth-Heinemann Ltd., beschriebenen Phosphor-Verbindungen. Diese können zum Teil auch als Deaktivatoren der oben beschriebenen Katalysatoren wirken. Beispielhaft seien genannt: Organophosphite, phosphonige Säure und phosphorige Säure. Als Verbindungen, die nur als Stabilisatoren wirken seien beispielhaft genannt: Trialkylphosphite, Triphenylphosphit, Trialkylphosphate, Triphenylphosphat und Tocopherol (Vitamin E; beispielsweise als Uvinul® 2003AO (BASF) erhältlich).

Üblicherweise erfolgt die Herstellung des Polyesters A unter Zugabe von geeigneten, an sich bekannten Katalysatoren wie Metallverbindungen auf der Basis folgender Elemente wie Ti, Ge, Zn, Fe, Mn, Co, Zr, V, Ir, La, Ce, Li, und Ca, bevorzugt metallorganische Verbindungen auf der Basis dieser Metalle wie Salze organischer Säuren, Alkoxide, Acetylacetonate und ähnliches, insbesondere bevorzugt auf Basis von Zink, Zinn und Titan.

Bei der Verwendung der erfindungsgemäßen biologisch abbaubaren Polyester, beispielsweise im Verpackungsbereich z.B. für Nahrungsmittel, ist es in der Regel wünschenswert, den Gehalt an eingesetztem Katalysator so gering als möglich zu wählen sowie keine toxischen Verbindungen einzusetzen. Im Gegensatz zu anderen Schwermetallen wie Blei, Zinn, Antimon, Cadmium, Chrom etc. sind Titan- und Zinkverbindungen in der Regel nicht toxisch ("Sax Toxic Substance Data Book", Shizuo Fujiyama, Maruzen, K.K., 360 S. (zitiert in EP-A 565,235), siehe auch Römpp Chemie Lexikon Bd. 6, Thieme Verlag, Stuttgart, New York, 9. Auflage, 1992, S. 4626 bis 4633 und 5136 bis 5143). Beispielhaft seien genannt: Dibutoxydiacetoacetoxytitan, Tetrabutylorthotitanat und Zink(II)-acetat.

Das Gewichtsverhältnis von Katalysator zu Polyester A liegt üblicherweise im Bereich von 0,01:100 bis 3:100, vorzugsweise von 0,05:100 bis 2:100, wobei bei hochaktiven Titanverbindungen auch kleinere Mengen eingesetzt werden können wie 0,0001:100.

Der Katalysator kann gleich zu Beginn der Reaktion, unmittelbar kurz vor der Abtrennung der überschüssigen Dihydroxyverbindung oder gewünschtenfalls auch in mehreren Portionen verteilt während der Herstellung der biologisch abbaubaren Polyester A eingesetzt werden. Gewünschtenfalls können auch verschiedene Katalysatoren oder auch Gemische davon eingesetzt werden.

Die Umsetzung der Polyester A mit der Mischung B erfolgt vorzugsweise in der Schmelze, wobei darauf zu achten ist, daß möglichst keine Nebenreaktionen auftreten, die zu einer Vernetzung oder Gelbildung führen können. Dies geschieht erfindungsgemäß durch die ausgewählten Mengenbereiche der Mischung B. Auch trägt eine möglichst gute Durchmischung dazu bei, daß Nebenreaktionen minimiert werden. In einer besonderen Ausführungsform führt man die Reaktion üblicherweise bei Temperaturen im Bereich von 140 bis 260, vorzugsweise von 180 bis 250°C durch, wobei die Zugabe der Mischung vorteilhaft in mehreren Portionen oder kontinuierlich erfolgt.

Gewünschtenfalls kann man die Umsetzung der Polyesters A mit der Mischung B auch in Gegenwart von gängigen inerten Lösemitteln wie Toluol, Methylethylketon oder Dimethylformamid ("DMF") oder deren Mischungen durchführen, wobei man die Reaktionstemperatur in der Regel im Bereich von 80 bis 200, vorzugsweise von 90 bis 150°C wählt.

Die Umsetzung mit der Mischung B kann diskontinuierlich oder kontinuierlich beispielsweise in Rührkesseln, statischen Mischern oder Reaktionsextrudern durchgeführt werden.

Man kann bei der Umsetzung der Polyester A mit der Mischung B auch gängige Katalysatoren einsetzen, die aus dem Stand der Technik bekannt sind (beispielsweise die in der EP-A 534,295 beschriebenen).

Beispielhaft seien genannt: tertiäre Amine wie Triethylamin, Dimethylcyclohexylamin, N-Methylmorpholin, N,N'-Dimethylpiperazin, Diazabicyclo-(2,2,2)-octan und ähnliche sowie insbesondere organische Metallverbindungen wie Titanverbindungen, Eisenverbindungen, Zinnverbindungen, z.B. Dibutoxydiacetoacetoxytitan, Tetrabutylorthotitanat, Zinndiacetat, -dioctoac, -dilaurat oder die Zinndialkylsalze aliphatischer Carbonsäuren wie Dibutylzinndiacetat, Dibutylzinndilaurat oder ähnliche, wobei wiederum darauf zu achten ist, daß möglichst keine toxischen Verbindungen eingesetzt werden sollten.

Ganz besonders bevorzugt werden die erfindungsgemäßen biologisch abbaubaren Polyester dadurch hergestellt, daß zunächst der Polyester A beispielsweise in einem Kessel oder einer kontinuierlichen Polykondensationsanlage wie oben beschrieben polymerisiert wird. Ohne weitere Reinigung wird der so erhaltene Polyester A in eine Mischvorrichtung, die eine möglichst gute Durchmischung des viskosen Polyesters A und der niedrigviskosen Mischung B erlaubt. Geeignete Mischvorrichtungen sind z.B. Extruder wie Reaktionsextruder, die eine Dosiervorrichtung, bevorzugt in der ersten Extruderhälfte, insbesondere dem ersten Extruderdrittel, aufweisen, oder statische Mischer. Bevor der Polyester A in die Mischvorrichtung wie den statischen Mischer überführt wird, kann es aber auch von Vorteil sein, den Polyester A in einem Zwischenschritt zu reinigen.

Die Mischung B kann vor dem Mischelement oder zu der Komponente A im Mischelement zudosiert werden. Nach einer besonders bevorzugten Ausführungsform wird die Komponente B vor dem Eintrag der Komponente A in den Extruder oder den statischen Mischer der aus dem Kessel oder Polymerisationsanlage ausgetragenen Komponenten kontinuierlich zugeführt. Die beiden Teilströme werden in dem statischen Mischer homogenisiert und reagieren dabei gleichzeitig. Die Massetemperaturen liegen in dem statischen Mischer besonders bevorzugt im Bereich von 190 bis 240°C.

Anschließend wird die Polymerschmelze z.B. durch einen Gießer oder eine Lochdüse ausgetragen und entweder unter Wasser granuliert oder in einem Kühlbad abgekühlt und anschließend granuliert. Für den Granulierschritt kann aber auch z.B. ein Bandgranulator eingesetzt werden.

Die erfindungsgemäßen biologisch abbaubaren Polyester, bzw. die Formmassen, die diese enthalten, kann man durch Walzen, Streichen, Spritzen oder Gießen auf Beschichtungsunterlagen aufbringen. Bevorzugte Beschichtungsunterlagen sind solche, die kompostierbar sind oder verrotten wie Formkörper aus Papier, Cellulose oder Stärke.

Die erfindungsgemäßen biologisch abbaubaren Polyester bzw. die Formmassen, können außerdem zur Herstellung von Formkörpern verwendet werden, die kompostierbar sind. Als Formkörper seien beispielhaft genannt: Wegwerfgegenstände wie Geschirr, Besteck, Müllsäcke, Folien für die Landwirtschaft zur Ernteverfrühung, oder für Nässeschutz als Betteinlagen, Fangopackungen oder Tischdecken, als Verpackungsfolien und Gefäße für die Anzucht von Pflanzen oder als Reifenmaterial, Wegwerfkleiderbügel, wie sie in Reinigungen benötigt werden, als Einmalhandschuhe oder medizinische Spritzen.

Des Weiteren kann man die erfindungsgemäßen biologisch abbaubaren Polyester, bzw. die Formmassen, die diese enthalten, in an sich bekannter Weise zu Fäden verspinnen. Die Fäden kann man gewünschtenfalls nach üblichen Methoden verstrecken, streckzwirnen, streckspulen, streckschären, streckschlichten und strecktexturieren. Die Verstreckung zu sogenanntem Glattgarn kann dabei in ein und demselben Arbeitsgang (fully drawn yarn oder fully oriented yarn), oder in einem getrennten Arbeitsgang erfolgen. Das Streckschären, Streckschlichten und die Strecktexturierung führt man im Allgemeinen in einem vom Spinnen getrennten Arbeitsgang durch. Die Fäden kann man in an sich bekannter Weise zu Fasern weiterverarbeiten. Aus den Fasern sind dann Flächengebilde durch Weben, Wirken oder Stricken zugänglich. Die Fäden können z.B. zum Verschließen von Wegwerfgegenständen oder zur Herstellung von Zahnseide dienen, oder Fasergebilde können für Zigarettenfilter eingesetzt werden; Vliese finden Anwendung im Hygienebereich oder im Haushalt.

Ein besonderes Anwendungsgebiet der erfindungsgemäßen biologisch abbaubaren Polyester, bzw. der Formmassen, die diese Polyester enthalten, betrifft die Verwendung als kompostierbare Folie oder einer kompostierbaren Beschichtung als Außenlage von Windeln. Die Außenlage der Windeln verhindert wirksam den Durchtritt von Flüssigkeiten, die im Innern der Windel vom Fluff und Superabsorbern, bevorzugt von bioabbaubaren Superabsorbern, beispielsweise auf Basis von vernetzter Polyacrylsäure oder vernetztem Polyacrylamid, absorbiert werden. Als Innenlage der Windel kann man ein Faservlies aus einem Cellulosematerial verwenden. Die Außenlage der beschriebenen Windeln ist biologisch abbaubar und damit kompostierbar. Sie zerfällt beim Kompostieren, so daß die gesamte Windel verrottet, während mit einer Außenlage aus beispielsweise Polyethylen versehene Windeln nicht ohne vorherige Zerkleinerung oder aufwendige Abtrennung der Polyethylenfolie kompostiert werden können.

Eine weitere bevorzugte Verwendung der erfindungsgemäßen biologisch abbaubaren Polyester, bzw. der Formmassen, die diese Polyester enthalten, betrifft die Herstellung von Klebstoffen in an sich bekannter Weise (siehe beispielsweise Encycl. of Polym. Sc. and Eng. Vol.1, "Adhesive Compositions", S. 547 bis 577). Analog zur Lehre der EP-A 21042 kann man die erfindungsgemäßen Polymere und Formmassen auch mit geeigneten klebrigmachenden thermoplastischen Harzen, bevorzugt Naturharzen, nach dort beschriebenen Methoden verarbeiten. Analog zur Lehre der DE-A 4,234,305 kann man die erfindungsgemäßen Polymere und Formmassen auch zu lösungsmittelfreien Klebstoffsystemen wie Hot-melt-Folien weiterverarbeiten. Daneben lassen sich beispielsweise Kunststoff-Folien herstellen, die sich beschriften lassen und die auf Papier haften, jedoch wieder abgezogen werden können, so daß sich gewünschte Textstellen markieren lassen.

Ein weiteres bevorzugtes Anwendungsgebiet betrifft die Herstellung vollständig abbaubarer Blends mit Stärkemischungen (bevorzugt mit thermoplastischer Stärke wie in der WO 90/05161 beschrieben) analog zu dem in der DE-A 42 37 535 beschriebenen Verfahren. Die erfindungsgemäßen Polymere und thermoplastischen Formmassen lassen sich nach bisherigen Beobachtungen auf Grund ihrer hydrophoben Natur, ihren mechanischen Eigenschaften, ihrer vollständigen Bioabbaubarkeit, ihrer guten Verträglichkeit mit thermoplastischer Stärke und nicht zuletzt wegen ihrer günstigen Rohstoffbasis vorteilhaft als synthetische Blendkomponente einsetzen.

Weitere Anwendungsgebiete betreffen beispielsweise die Verwendung der erfindungsgemäßen biologisch abbaubaren Polyester, bzw. der Formmassen, die diese Polyester enthalten, in landwirtschaftlichem Mulch, Verpackungsmaterial für Saatgut, Nährstoffe oder Blumen, Substrat in Klebefolien, Babyhöschen, Taschen, Bettücher, Flaschen, Kartons, Staubbeutel, Etiketten, Kissenbezüge, Schutzkleidung, Hygieneartikel, Taschentücher, Spielzeug und Wischer.

Die erfindungsgemäßen biologisch abbaubaren Polyester zeichnen sich dadurch aus, daß sie gezielt eingebaute Verzweigungsstellen enthalten, dennoch nicht vernetzt sind und so thermoplastisch verarbeitbar bleiben und gut unter Bedingungen wie sie im Kompost herrschen abgebaut werden können.

Die Vorteile der erfindungsgemäßen biologisch abbaubaren Polyester gegenüber anderen bekannten biologisch abbaubaren Polyestern auf der Basis aliphatischer und aromatischer Dicarbonsäuren liegt in der guten Oberflächenqualität, die die Formkörper oder Folien, die aus den erfindungsgemäßen Polyestern bzw. den Formmassen, die diese enthalten, aufweisen. Die Oberflächen sind weitgehendst frei von Schmutzpunkten oder Stippen. Außerdem haben sie auch keine Fehlstellen, die von Gelbildung herrühren. Ferner eignen sich die erfindungsgemäßen biologisch abbaubaren Polyester zur Herstellung von Folien oder Formkörpen in konventionellen mit hohen Cycluszeiten arbeitenden Formgebungsmaschinen. Es lassen sich sehr dünne Folien bei gleichzeitig geringem Gehalt an aromatischen Bausteinen im Polyester herstellen. Ferner übertragen die erfindungsgemäßen biologisch abbaubaren Polyester ihre günstigen Folieneigenschaften auf die daraus hergestellten Blends.

Darüberhinaus weisen die erfindungsgemäßen biologisch abbaubaren Polyester überraschenderweise eine Strukturviskosität, d.h. eine von der Scherrate abhängige Viskosität, auf, die stärker ausgeprägt ist, als diejenige von Polyestern entsprechender Struktur und Kettenlänge, die Verzweigungspunkte aufweisen, die sich von trifunktionellen Verzweigungsmitteln wie trifunktionellen Alkoholen oder reinen trifunktionellen Isocyanaten ableiten. Bereits bei einem geringeren Verzweigungsgrad als im Falle der Verzweigung mit trifunktionellen Verzweigungsmitteln haben die erfindungsgemäßen biologisch abbaubaren Polyester daher eine höhere mechanische Schmelzestabilität.

Gegenüber linearen biologisch abbaubaren Polyestern haben die erfindungsgemäßen biologisch abbaubaren Polyester eine verbesserte, weil in Längs- wie auch Querrichtung ausgeglichene Reißdehnung. Die erfindungsgemäßen Polyester weisen im Vergleich zu linearen biologisch abbaubaren Polyestern mit vergleichbarem Gehalt an Gruppen, die sich von Isocyanaten ableiten darüberhinaus vergleichbar hohe Reißfestigkeiten und Streckspannungen bei gleichzeitig niedrigeren Reißdehnungen auf. Sie eignen sich deshalb insbesondere für die Herstellung von Blasfolien.

### Beispiele

Der Schmelzvolumenindex wurde gemäß ISO 1133 bei einer Belastung von 2,16 kg und einer Temperatur von 190°C gemessen.

Die Bestimmungen der Hydroxyl-Zahl (OH-Zahl) und Säure-Zahl (SZ) erfolgten nach folgenden Methoden:
(a) Bestimmung der scheinbaren Hydroxyl-Zahl
   Zu ca. 1 bis 2 g exakt eingewogener Prüfsubstanz wurden 10 ml Toluol und 9,8 ml Acetylierungsreagenz (s.u.) gegeben und 1 h bei 95°C unter Rühren erhitzt. Danach wurden 5 ml dest. Wasser zugeführt. Nach Abkühlen auf Raumtemperatur wurden 50 ml Tetrahydrofuran (THF) zugesetzt und mit ethanolischer KOH-Maßlösung gegen Wendepunkt potentiographisch titriert.
   Der Versuch wurde ohne Prüfsubstanz wiederholt (Blindprobe).
   Die scheinbare OH-Zahl wurde dann aufgrund folgender Formel ermittelt:

   scheinb. OH-Zahl c·t·56,1·(V2-V1)/m (in mg KOH/g)

   wobei
   c = Stoffmengenkonzentration der ethanol. KOH-Maßlösung in mol/l,
   t = Titer der ethanol. KOH-Maßlösung
   m = Einwaage in mg der Prüfsubstanz
   V1 = Verbrauch der Maßlösung mit Prüfsubstanz in ml
   V2 = Verbrauch der Maßlösung ohne Prüfsubstanz in ml
   bedeuten.
   Verwendete Reagenzien:
   ethanol. KOH-Maßlösung, c = 0,5 mol/l, Titer 0,9933 (Merck, Art.Nr. 1.09114)
   Essigsäureanhydrid p.A. (Merck, Art.Nr. 42)
   Pyridin p.A. (Riedel de Haen, Art.-Nr 33638)
   Essigsäure p.A. (Merck, Art.Nr. 1.00063)
   Acetylierungsreagenz: 810 ml Pyridin, 100 ml
   Essigsäureanhydrid und 9 ml
   Essigsäure
   Wasser, deionisiert
   THF und Toluol
(b) Bestimmung der Säurezahl (SZ)
   Ca. 1 bis 1,5 g Prüfsubstanz wurden exakt eingewogen und mit 10 ml Toluol und 10 ml Pyridin versetzt und anschließend auf 95°C erhitzt. Nach dem Lösen wurde auf Raumtemperatur abgekühlt, 5 ml Wasser und 50 ml THF zugegeben und mit 0,1 N ethanol. KOH-Maßlösung titriert.
   Die Bestimmung wurde ohne Prüfsubstanz wiederholt (Blindprobe)
   Die Säure-Zahl wurde dann aufgrund folgender Formel ermittelt:

   SZ = c·t·56,1·(V1-V2)/m (in mg KOH/g)

   wobei
   c = Stoffmengenkonzentration der ethanol. KOH-Maßlösung in mol/l,
   t = Titer der ethanol. KOH-Maßlösung
   m = Einwaage in mg der Prüfsubstanz
   V1 = Verbrauch der Maßlösung mit Prüfsubstanz in ml
   V2 = Verbrauch der Maßlösung ohne Prüfsubstanz in ml
   bedeuten.
   Verwendete Reagenzien:
   ethanol. KOH-Maßlösung, c = 0,1 mol/1, Titer = 0,9913 (Merck, Art.Nr. 9115)
   Pyridin p.A. (Riedel de Haen, Art.Nr. 33638)
   Wasser, deionisiert
   THF und Toluol
(c) Bestimmung der OH-Zahl
   Die OH-Zahl ergibt sich aus der Summe der scheinbaren OH-Zahl und der SZ:
   OH-Zahl = scheinb. OH-Zahl + SZ

Der Verzweigungsgrad (Vg [mol-%]) gibt das molare Verhältnis der Verzweigungsstellen zur Summe aus den Dicarbonsäuren und den Dihydroxyverbindungen an.

Die Filmdicke wurde mittels einer elektronischen Mikrometerschraube bestimmt.

In Zugversuchen gemäß ISO 527 wurde die Reißfestigkeit (σ_{R} [MPa]), die Reißdehnung (ε_{R} [%] sowie die Streckspannung (σ_{R} [MPa]) ermittelt.

Abkürzungen:
- DMT:: Dimethylterephthalat
- Gl:: Glycerin
- HDI:: 1,6-Hexamethylendiisocyanat
- TBOT:: Tetrabutylorthotitanat
- TP:: Trimethylolpropan

### Herstellung der Polyester A1 bis A3

### Polyester A1

(a') 4672 kg 1,4 Butandiol, 7000 kg Adipinsäure und 50 g Zinndioctoat wurden in einer Stickstoffatmosphäre bei einer Temperatur im Bereich von 230 bis 240°C zur Reaktion gebracht. Nach Abdestillieren der Hauptmenge des bei der Umsetzung gebildeten Wassers, wurden 10 g Tetrabutylorthotitanat (TBOT) zur Reaktionsmischung gegeben. Nachdem die Säurezahl unter den Wert 2 gesunken war, wurde unter vermindertem Druck überschüssiges 1,4-Butandiol solange abdestilliert, bis eine OH-Zahl von 56 erreicht war.

(a'') 1,81 kg des Polyesters aus a', 1,17 kg Dimethyltherephthalat (DMT), 1,7 kg 1,4-Butandiol und 4,7 g TBOT wurden in einen Dreihalskolben gegeben und unter Stickstoffatmosphäre mit langsamen Rühren auf 180°C erhitzt. Dabei wurde das während der Umesterungsreaktion gebildete Methanol abdestilliert. Innerhalb von 2 h wurde unter Erhöhung der Rührgeschwindigkeit auf 230°C erhitzt und nach einer weiteren Stunde noch 2 g 50 gew.-%ige wäßrige phosphorige Säure zugegeben. Innerhalb von 1 h wurde der Druck auf 5 mbar abgesenkt und bei 240°C und bei einem Druck von weniger als 2 mbar für verschieden lange Zeiten gehalten, um den Polykondensationsgrad zu kontrollieren, wobei das im Überschuß eingesetzte 1,4-Butandiol abdestillierte.

Die so hergestellten Polyester A1 hatten eine Säurezahl von bis zu 1 mg KOH und eine OH-Zahl (korr.) von mindestens 3 mg KOH. Die Schmelzflußindices der Polyester A1 sind in Tabelle 1 angegeben.

### Polyester A2

776,8 g (4,0 mol) DMT, 1622,2 g 1,4-Butandiol (18 mol) und 0,327 g TBOT wurden in einer Stickstoffatmosphäre bei einer Temperatur im Bereich von 230 bis 240°C zur Reaktion gebracht. Nach Abdestillieren der Hauptmenge des bei der Umsetzung gebildeten Methanols wurden 876,8 (6,0 mol) Adipinsäure zugegeben, Vakuum angelegt und solange polykondensiert bis ein Schmelzflußindex von 60 cm³/10 min (2,16 kg, 190°C), eine OH-Zahl von 5,0 mg KOH und eine Säurezahl von 0,6 mg KOH erreicht wurde.

### Polyester A3

Es wurde wie unter Polyester A1 beschrieben, vorgegangen. Allerdings wurde bis zu einem Schmelzflußindex von 54 cm³/10 min kondensiert. Der Polyester A3 hatte eine Säurezahl von 4,5 mg KOH und eine OH-Zahl von 0,9 mg KOH.

### Mischung B1

Die Herstellung von B1 erfolgte durch Oligomerisierung von HDI in Gegenwart von N,N,N-Trimethyl-2-hydroxypropylammonium-2-ethylhexanoat. Die Abnahme des NCO-Gehaltes der Mischung wurde verfolgt. Bei einem NCO-Gehalt im Bereich von 40 bis 43 % wurde die Reaktion durch Desaktivieren des Katalysators abgebrochen. Anschließend wurde die Reaktionsmischung destilliert.

Die Zusammensetzung wurde mittels Gelpermeationschromatographie bestimmt.

| | |
|---|---|
| 55 Gew.-% | des einkernigen Isocyanurates von Hexamethylendiisocyanat, |
| 20 Gew.-% | des zweikernigen Isocyanurates von Hexamethylendiisocyanat, |
| 10 Gew.-% | des dreikernigen Isocyanurates von Hexamethylendiisocyanat, |
| 15 Gew.-% | der höherkernigen Isocyanurate von Hexamethylendiisocyanat, |

Die Mischung B1 hatte eine Gesamtfunktionalität von 3,7 und ein Molgewicht (Zahlenmittelwert Mn) von 740 g/mol.

### Erfindungsgemäße Beispiele 1 bis 5

Der Polyester A 1 und die Mischung B1 wurden in den in der Tabelle 1 angegebenen Mengen bei 210°C, unter Stickstoffatmosphäre vereint und einige Minuten gerührt. Anschließend wurden die Schmelzen untersucht.

### Vergleichsbeispiele V1 und V2

Zu Beginn des Schrittes a" bei der Herstellung des Polyester A1 wurde den Monomeren die in der Tabelle 1 angegebene Menge Trimthylolpropan (TP) oder Glycerin (G1) zugegeben. Ansonsten erfolgte die Herstellung der Polyester V1 und V2 wie oben beschrieben.

### Vergleichsbeispiel V3

Die Herstellung erfolgte wie unter A1 beschrieben. Anschließend wurden die Polyester A1 mit 1,6-Hexamethylendiisocyanat und Glycerin anstelle einer Mischung B1 umgesetzt. Die Umsetzung mit 1,6-Hexamethylendiisocyanat erfolgte wie unter Beispiel 1 bis 5 beschrieben.

### Vergleichsbeispiele V4 bis V6

Es wurde wie unter Beispiel 1 bis 5 beschrieben vorgegangen, jedoch wurde 1,6-Hexamethylendiisocyanat anstelle der Mischung B1 eingesetzt.

**Tabelle 1:**

| Bsp.-Nr. | A1 [mol-%]/MVI[cm³/10 min] | B1 [mol-%] | HDI [mol-%] | TP [mol-%] | Gl [mol-%] |
|---|---|---|---|---|---|
| 1 | 99,90/5 | 0,10 | - | - | - |
| 2 | 99,92/14 | 0,08 | - | - | - |
| 3 | 99,72/19 | 0,28 | - | - | - |
| 4 | 99,95/139 | 0,05 | - | - | - |
| 5 | 99,72/58 | 0,28 | - | - | - |
| V1 | 99,72/56 | - | - | 0,28 | - |
| V2 | 99,91/106 | - | - | 0,09 | - |
| V3 | 98,22/155 | - | 0,5 | - | 0,28 |
| V4 | > 99,5/3 | - | <0,5 | - | - |
| V5 | > 99,5/6 | - | <0,5 | - | - |
| V6 | > 99,5/26 | - | <0,5 | - | - |
| V7 | 100/62 | - | - | - | - |
| V8 | 100/155 | - | - | - | - |
| V9 | 100/ >250 | - | - | - | - |

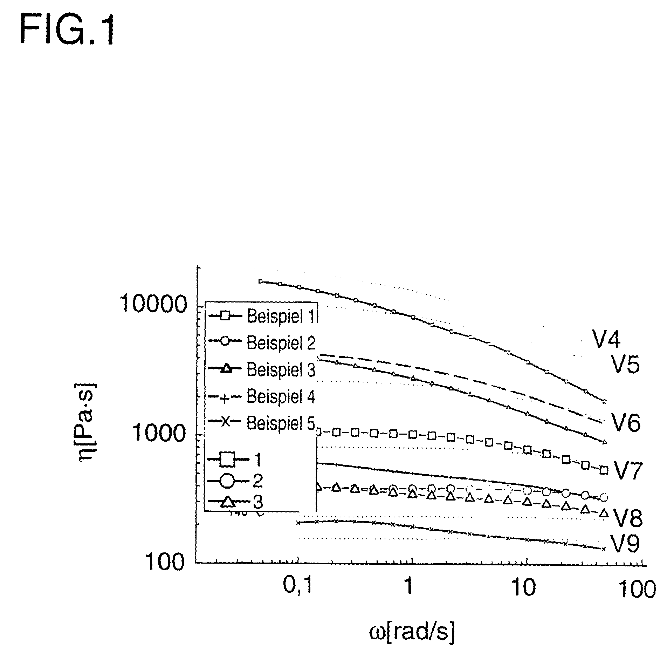

Die Abbildung 1 zeigt die Viskositätsfunktionen (dynamischen Viskositäten) der erfindungsgemäßen Polyester und der Vergleichsbeispiele, gemessen bei oszillatorischer Scherung mit kleiner Amplitude (Dynamic-Stress-Rheometer DSR mit Platte-Platte Geometrie, Durchmesser: 25 mm, Höhe: 1 mm) bei 140°C und einer Schubspannungsamphitude von 100 Pa.

wie die Abbildung 1 erkennen läßt, sind die Effekte am stärksten ausgeprägt bei Scherraten von ca. 100 rad/s, wie sie typischerweise beim Extrudieren von Polymerschmelzen auftreten.

### Erfindungsgemäßes Beispiel 6

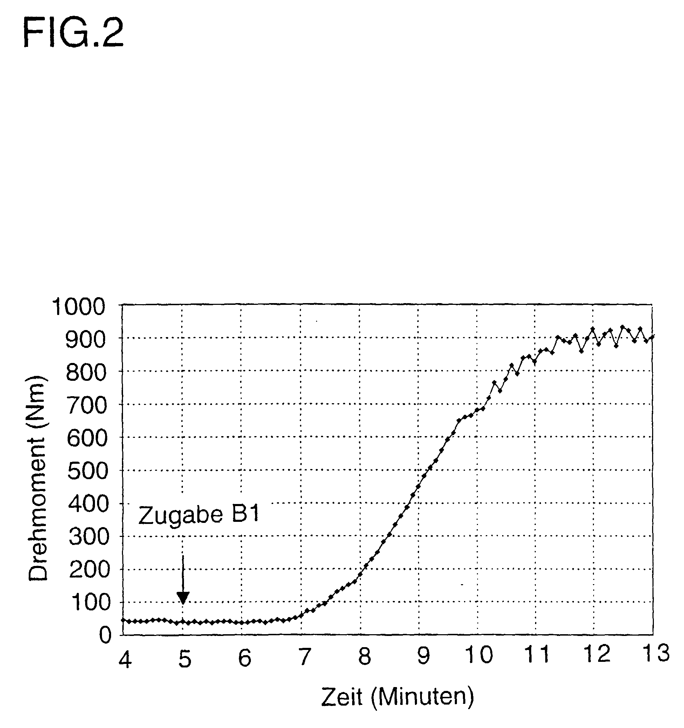

50 g des Polyesters A2 wurden bei 235°C unter Stickstoffatomosphäre mit 0,5 g der Mischung B1 versetzt, was einer Zugabe von 0,0025 mol Isocyanatgruppen entspricht. Während der Reaktionszeit wurde die Reaktionsmischung in einem Kneter gerührt und gleichzeitig die Drehmomentzunahme des Rührers gemessen (siehe Abbildung 2). Der Schmelzvolumenindex betrug 1,2 cm³/10 min.

### Vergleichsbeispiel V10

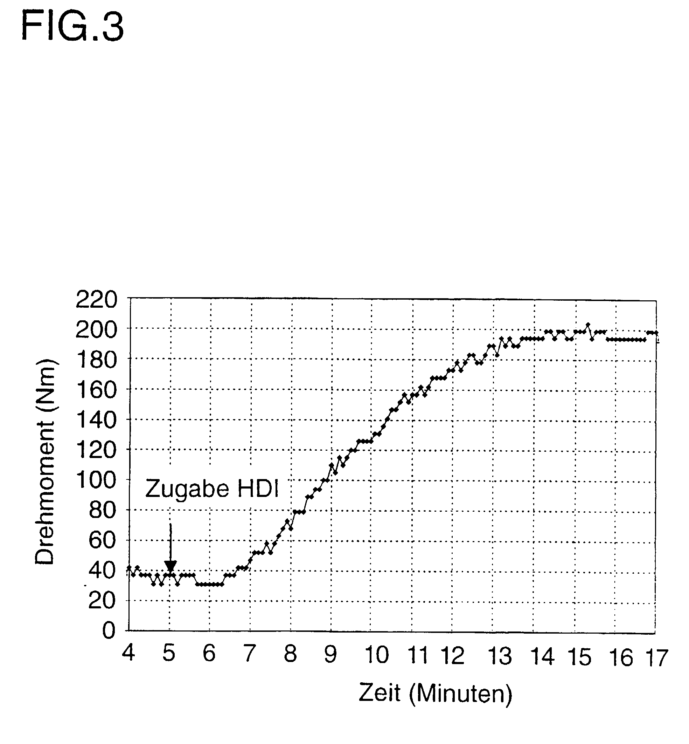

Der Versuch wurde wie unter Beispiel 6 beschrieben ausgeführt, jedoch wurden anstelle der Mischung B1 0,2 g Hexamethylendiisocyanat eingesetzt, was ebenfalls 0,0025 mol Isocyanatgruppen entspricht. Der Verlauf der Drehmomentzunahme ist Abbildung 3 zu entnehmen. Der Schmelzvolumenindex betrug 22,3 cm³/10 min.

Aus den Ergebnissen dieser Untersuchungen geht hervor, daß die erfindungsgemäßen Polyester eine sehr viel höhere Viskosität aufweisen als lineare Polyester mit dem gleichen Gehalt an Gruppen, die sich von den Isocyanaten ableiten. Die erfindungsgemäßen Polyester weisen deshalb eine höhere Schmelzestabilität auf.

### Beispiel 7

Die Schmelze des Polyesters A3 wurde in einem statischen Mischer bei 200°C auf 0,15 mol-% der Mischung B1 vereint. Der so erhaltene erfindungsgemäße Polyester hatte einen Schmelzvolumenindex von 5,3 cm³/10 min.

### Vergleichsbeispiel Vll

Die Schmelze des Polyesters A3 wurde in einem statischen Mischer bei 200°C mit 0,5 mol-% HDI vereint. Der so erhaltene Polyester wies einen MVI von 5,5 cm³/10 min auf.

An den Schmelzen des Polyesters A3, des erfindungsgemäßen Polyesters 7 und des Polyesters gemäß dem Stand der Technik wurden die η* Viskositäten und die Nachgiebigkeiten bestimmt. Die Ergebnisse sind in der Tabelle 2 angegeben.

Der Viskositätswert η* [Pas] errechnet sich aus dem elastischen (G'[Pa]) und dem viskosen Anteil (G"[Pa]) des Spannungssignales, die bei einer oszillatorischen Scherung der Probe bei einer bestimmten Frequenz gemessen werden (η* = √(G'² + G"²)/ω). Der in der Tabelle für η* angegebene Wert, ist derjenige, der sich für G" = 1000 Pa ergibt. Die η*-Werte bei unterschiedlichen Temperaturen sind ein Maß für die Breite des Temperaturfensters in dem sich ein Polymer unter Scherbeanspruchung verarbeiten, z.B. extrudieren, läßt. Dabei ist das Temperaturfenster um so größer, je weniger sich die η*-Werte bei den unterschiedlichen Temperaturen voneinander unterscheiden.

Mittels der Nachgiebigkeit Jₑ [Pa⁻¹] kann darauf geschlossen werden wie fließfähig ein Polymer unter Verarbeitungsbedingungen ist, bei denen Scherkräfte wirken, beispielsweise in einem Extruder (Jₑ = G'/G"²). Dabei gilt, daß ein hoher Jₑ-Wert, ein fließfähiges Polymer und einen hohen erreichbaren Durchsatz anzeigt.

Apparativ erfolgten die Messungen dadurch, daß man die im Vakuum getrockneten Proben jeweils bei 80°C auf ein mit einem Platte/ Platte-Meßeinsatz versehener Rotations Rheometer (Rheometrics Pyramic Spektometer der Firma Rheometric Scientific) aufbringt, schmilzt und mit konstanter Scheramplitude von 0,5 einer oszillatorischen Messung bei Kreisfrequenzen von 100 bis 0,1 rad/s unterwirft.

Die Ergebnisse der Untersuchungen sind Tabelle 2 zu entnehmen.

| Bsp.-Nr. | MVI [cm³/10 min] | Temperatur [°C] | η* [Pas] | Jₑ [Pa⁻¹] |
|---|---|---|---|---|
| 7 | 5,3 | 190 | 511 | 9,60E⁻⁰⁵ |
| | | 220 | 266 | 8,62E⁻⁰⁵ |
| | | 250 | 107 | 5,97E⁻⁰⁵ |
| A3 | 54,1 | 190 | 185 | 1,30E⁻⁰⁵ |
| | | 220 | 85 | 1,22E⁻⁰⁵ |
| | | 250 | 55 | 1,11E⁻⁰⁵ |
| V11 | 5,5 | 190 | 2215 | 4,60E⁻⁰⁵ |
| | | 220 | 800 | 3,57E⁻⁰⁵ |
| | | 250 | 240 | 1,85E⁻⁰⁵ |

### Beispiel 8

Die Schmelze des Polyesters A3 wurde in einem statischen Mischer bei 200°C mit 0,15 mol-% der Mischung B1 vereint. Der so erhaltene erfindungsgemäße Polyester hatte einen MVI von 14 cm³/10 min.

### Beispiel 9

Die Schmelze des Polyesters A3 wurde in einem statischen Mischer bei 200°C mit 0,3 mol-% der Mischung B1 vereint. Der so erhaltene erfindungsgemäße Polyester hatte einen MVI von 5 cm³/10 min.

### Vergleichsbeispiel V 12

Die Schmelze des Polyesters A3 wurde in einem statischen Mischer bei 200°C mit 0,35 mol-% HDI vereint. Der so erhaltene Polyester wies einen MVI von 15 cm³/10 min auf.

### Vergleichsbeispiel V 13

Die Schmelze des Polyesters A3 wurde in eiem statischen Mischer bei 200°C mit 0,48 mol-% HDI vereint. Der so erhaltene Polyester wies einen MVI von 6 cm³/10 min auf.

### Vergleichsbeispiel V 14

110,1 kg des Umsetzungsproduktes (a'), stammend aus der Herstellung des Polyesters A1, wurden mit 87,4 kg DMT, 117,2 kg 1,4-Butandiol und 0,315 g TBOT wie unter a" beschrieben, polykondensiert. Die Schmelze wurde ausgetragen und in einem statischen Mischer bei 200°C mit 0,35 mol-% HDI vereint. Der so erhaltene Polyester wies einen MVI von 12 cm³/10 min auf.

### Beispiel 10

Der Versuch wurde wie unter V 14 angegeben ausgeführt, jedoch wurden anstelle 0,35 mol-% HDI 0,3 mol-% der Mischung B1 verwendet. Der so erhaltene erfindungsgemäße Polyester wies einen MVI von 5 cm³/10 min auf.

Die erfindungsgemäßen Polyester 8 und 9 sowie die Polyester A3 und V 12 bis V 14 wurden jeweils bei einer Temperatur im Bereich von 130 bis 135°C extrudiert und zu einer Folie geblasen, wobei das Aufblasverhältnis 1:2 betrug. In der Tabelle 3 sind die Ergebnisse der anwendungstechnischen Untersuchungen zusammengestellt.

**Tabelle 3**

| Bsp.-Nr. | T:A [mol-%] | MVI | Vg | min. Filmdicke (µm) | σ_{R} (MPa) | ε_{R} (%) | σₛ (MPa) |
|---|---|---|---|---|---|---|---|
| A3 | 40:60 | 56 | 0 | 100^{a)} | 14 | 950 | 5,1 |
| 8 | 40:60 | 14 | 0,17 | 15 | 28 | 710 | 7,1 |
| V 12 | 40:60 | 15 | 0 | 25^{b)} | 24 | 825 | 5,9 |
| 9 | 40:60 | 5 | 0,21 | 15 | 36 | 600 | 7,5 |
| V 13 | 40:60 | 6 | 0 | 20^{b)} | 34 | 640 | 6,2 |
| V 14 | 45:55 | 12 | 0 | 15 | 26 | 760 | 7,2 |
| 10 | 45:55 | 5 | 0,20 | 7 | 42 | 580 | 81 |

| | | | | | | | |
|---|---|---|---|---|---|---|---|
| a) Eine Herstellung einer intakten Schlauchfolie war nicht möglich. Die Messung erfolgte an Folienteilen | | | | | | | |
| b) Folien mit einer Dicke von 15 um konnten nicht hergestellt werden T: Gehalt an Einheiten, die sich von Terephthalsäure ableiten A: Gehalt an Einheiten, die sich von Adipinsäure ableiten, jeweils bezogen auf die Summe aus T und A. | | | | | | | |

Die Polyester 8, 9 und A3 sowie V12 bis V13 weisen bis auf die Verknüpfungsart die gleiche stöchiometrische Zusammensetzung auf. Die Daten zeigen, daß die erfindungsgemäßen Polyester zu dünneren Folien verarbeitet werden können als die Vergleichspolyester. Die erfindungsgemäßen Polyester weisen im Vergleich zu den Polyestern V 12 und V 13 vergleichbar hohe Reißfestigkeiten und Streckspannungen bei gleichzeitig niedrigeren Reißdehnungen auf.

Anhand des Vergleichsbeispieles V 14 und des erfindungsgemäßen Beispiels 10 läßt sich feststellen, daß die erfindungsgemäßen Polyester, ebenso gute mechanische Eigenschaften aufweisen wie entsprechende Polyester mit einem höheren Anteil an aromatischen Einheiten bzw. mit dem gleichen Gehalt an aromatischen Einheiten bessere mechanische Eigenschaften aufweisen.

### Biologische Abbaubarkeit

### Erfindungsgemäßes Beispiel 11

Zu der Schmelze des Polyesters A3 wurden in einem statischen Mischer bei 200°C 0,3 mol-% der Mischung B1 zugegeben und gemischt. Der so erhaltene Polyester wies einen Schmelzvolumenindex von 4,7 cm³/10 min auf.

### Vergleichsbeispiel V15

Es wurde wie unter Beispiel 11 beschrieben vorgegangen. Allerdings wurde die Schmelze des Polymeren A3 mit 0,5 mol-% HDI anstelle mit 0,3 mol-% der Mischung B1 versetzt. Der so erhaltene Polyester wies einen Schmelzvolumenindex von 4,4 cm³/10 min auf.

66 g des Polyesters 11 bzw. des Vergleichspolyesters V15 wurden gemahlen und mit 625 g Kompost (36 % absoluter Feuchtegehalt) gemischt und 105 Tage lang bei 58°C im Brutschrank inkubiert. Als Kontrollsubstanz diente mikrokristalline Cellulose (Typ Avicell® der Firma Merck).

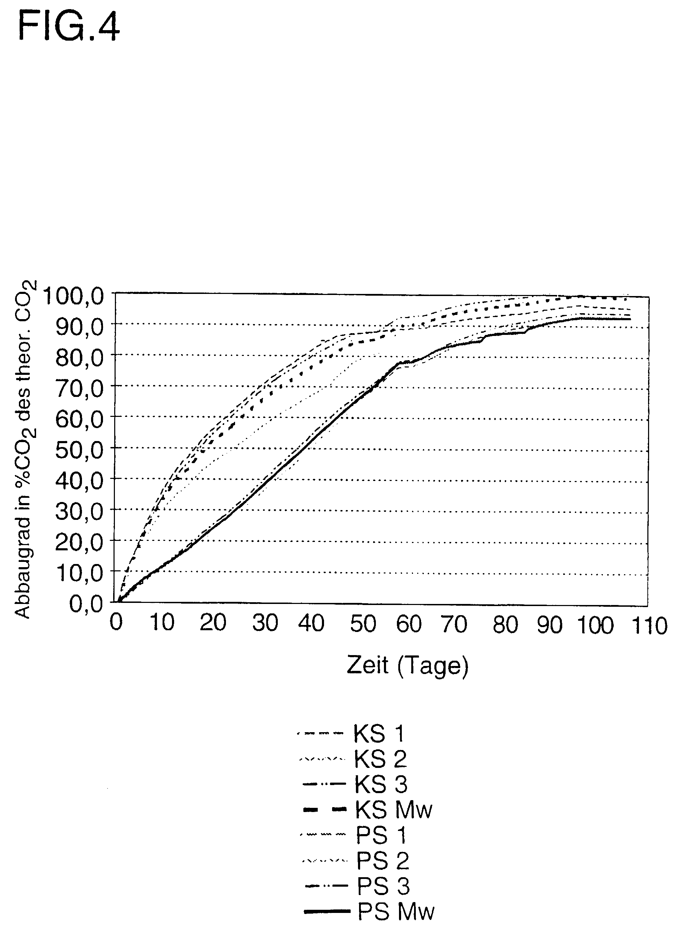

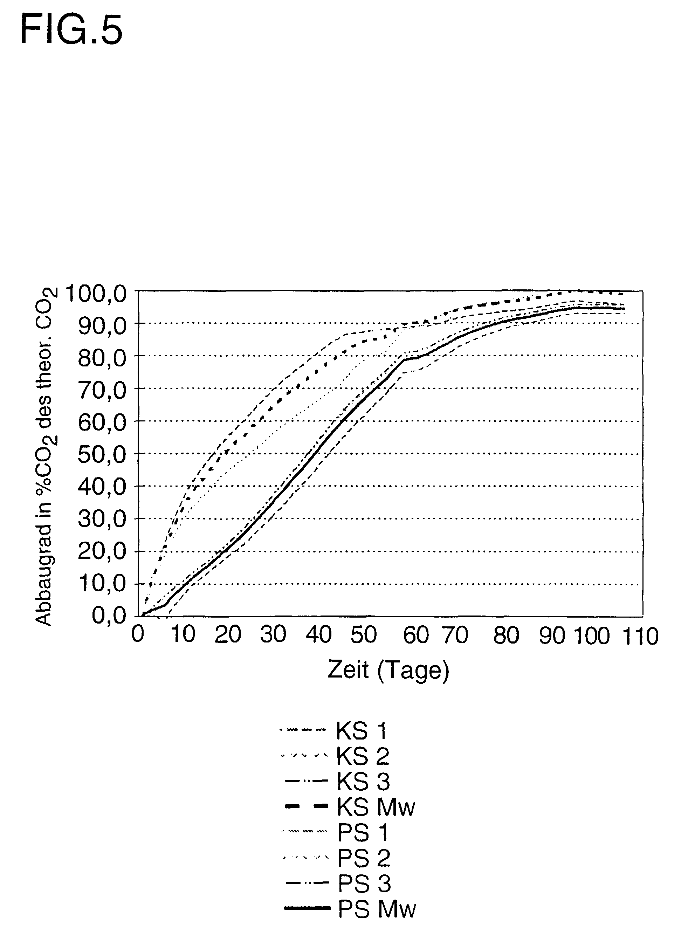

Die verwendeten Reaktorgefäße hatten perforierte Bodenplatten, über die sie mit einer Pumpe kontinuierlich von unten mit angefeuchteter Luft begast wurden. Dabei wurde die Kompostfeuchte auf 55 % absolute Feuchte eingestellt. Die aus der mikrobiellen Umsetzung resultierende CO₂-Konzentration wurde in der Abluft stündlich über IR-Spektroskopie gemessen und aufgezeichnet. Über die zu jeder Messung erfaßte Gasflußrate wurde die gebildete CO₂-Menge pro Tag ermittelt und der Abbaugrad, bezogen auf die maximal mögliche theoretische CO₂-Bildung (ThCO₂) errechnet. Die gemessenen Abbaugrade von jeweils drei Proben des Polyesters 11 (PS1, PS2, PS3) und der Kontrollsubstanz Cellulose (KS1, KS2, KS3) sowie deren jeweiligen Mittelwerte (Polyester 11: PSM_{w}, Cellulose: KSM_{w}) sind Abbildung 4 zu entnehmen.

## Patentansprüche

1. Biologisch abbaubare Polyester, auf der Basis von
A) 95 bis 99,99 mol-% mindestens eines Polyesters, enthaltend als monomere Bausteine
a₁) eine Säurekomponente aus
a₁₁) 20 bis 95 mol-% mindestens einer aliphatischen oder cycloaliphatischen Dicarbonsäure oder deren esterbildendem Derivat und
a₁₂) 5 bis 80 mol-% mindestens einer aromatischen Dicarbonsäure oder deren esterbildendem Derivat, wobei sich die Anteile von a₁₁ und a₁₂ jeweils auf die Gesamtmenge von a₁₁ und a₁₂ beziehen und
a₂) mindestens eine Dihydroxyverbindung oder mindestens ein Aminoalkohol oder deren Mischungen
und
B) 0,01 bis 5 mol-% einer Mischung, enthaltend
b₁) 45 bis 80 Gew.-% mindestens einer einkernigen Isocyanurates (b₁₁) oder mindestens einer Verbindung (b₁₂), die zwei funktionelle Gruppen enthält, die mit den Endgruppen des Polyesters A reagieren können oder Mischungen aus b₁₁ und b₁₂,
b₂) 13 bis 25 Gew.-% mindestens eines zweikernigen Isocyanurates (b₂₁) oder mindestens einer Verbindung (b₂₂), die drei funktionelle Gruppen enthält, die mit den Endgruppen des Polyesters A reagieren können oder Mischungen aus b₂₁ und b₂₂,
b₃) 5 bis 12 Gew.-% mindestens eines dreikernigen Isocyanurates (b₃₁) oder mindestens einer Verbindung (b₃₂), die vier funktionelle Gruppen enthält, die mit den Endgruppen des Polyesters A reagieren können oder Mischungen aus b₃₁ und b₃₂ und
b₄) 2 bis 18 Gew.-% mindestens eines vier- oder höherkernigen Isocyanurates (b₄₁) oder Mischungen unterschiedlicher Isocyanurate (b₄₁).

2. Biologisch abbaubare Polyester nach Anspruch 1, auf der Basis von
97 bis 99,95 mol-% des Polyesters A und
0,05 bis 3 mol-% der Mischung B.

3. Biologisch abbaubare Polyester nach Anspruch 1 oder 2, worin B eine Isocyanuratmischung, enthaltend
b₁) 45 bis 80 Gew.-% eines einkernigen Isocyanurates,
b₂) 13 bis 25 Gew.-% eines zweikernigen Isocyanurates,
b₃) 5 bis 12 Gew.-% eines dreikernigen Isocyanurates und
b₄) 2 bis 18 Gew.-% von vier- oder höherkernigen Isocyanuraten oder deren Mischungen
ist.

4. Formmassen, enthaltend biologisch abbaubare Polyester gemäß einem der Ansprüche 1 bis 3 und gewünschtenfalls mindestens ein weiteres thermoplastisches Polymeres oder mindestens ein weiteres biologisch abbaubares Polymeres oder deren Mischungen.

5. Verfahren zur Herstellung biologisch abbaubarer Polyester, dadurch gekennzeichnet, daß man in einem ersten Schritt Polyester A, enthaltend als monomere Bausteine
a₁) eine Säurekomponente aus
a₁₁) 20 bis 95 mol-% mindestens einer aliphatischen oder cycloaliphatischen Dicarbonsäure oder deren esterbildendem Derivat und
a₁₂) 5 bis 80 mol-% mindestens einer aromatischen Dicarbonsäure oder deren esterbildendem Derivat, wobei sich die Anteile von a₁₁ und a₁₂ jeweils auf die Gesamtmenge von an und a₁₂ beziehen und
a₂) mindestens eine Dihydroxyverbindung oder mindestens ein Aminoalkohol oder deren Mischungen
herstellt und in einem zweiten Schritt mit einer Mischung B, enthaltend
b₁) 45 bis 80 Gew.-% mindestens einer einkernigen Isocyanurates (b₁₁) oder mindestens einer Verbindung (b₁₂), die zwei funktionelle Gruppen enthält, die mit den Endgruppen des Polyesters A reagieren können oder Mischungen aus b₁₁ und b₁₂,
b₂) 13 bis 25 Gew.-% mindestens eines zweikernigen Isocyanurates (b₂₁) oder mindestens einer Verbindung (b₂₂), die drei funktionelle Gruppen enthält, die mit den Endgruppen des Polyesters A reagieren können oder Mischungen aus b₂₁ und b₂₂,
b₃) 5 bis 12 Gew.-% mindestens eines dreikernigen Isocyanurates (b₃₁) oder mindestens einer Verbindung (b₃₂), die vier funktionelle Gruppen enthält, die mit den Endgruppen des Polyesters A reagieren können oder Mischungen aus b₃₁ und b₃₂ und
b₄) 2 bis 18 Gew.-% mindestens eines vier- oder höherkernigen Isocyanurates (b₄₁) oder Mischungen unterschiedlicher Isocyanurate (b₄₁)
wobei von 95 bis 99,9 mol-% Polyester A und von 0,01 bis 5 mol-% der Mischung B miteinander umgesetzt werden.

6. Verfahren zur Herstellung biologisch abbaubarer Polyester nach Anspruch 5, dadurch gekennzeichnet, daß man 97 bis 99,95 mol-% Polyester A mit 0,05 bis 3 mol-% Mischung B umsetzt.

7. Verfahren zur Herstellung biologisch abbaubarer Polyester nach Anspruch 5 oder 6, dadurch gekennzeichnet, daß man als Mischung B eine Isocyanuratmischung, enthaltend
b₁) 45 bis 80 Gew.-% eines einkernigen Isocyanurates,
b₂) 13 bis 25 Gew.-% eines zweikernigen Isocyanurates,
b₃) 5 bis 12 Gew.-% eines dreikernigen Isocyanurates und
b₄) 2 bis 18 Gew.-% von vier- oder höherkernigen Isocyanuraten oder deren Mischungen
verwendet.

8. Verfahren nach den Ansprüchen 5 bis 7, dadurch gekennzeichnet, daß man die Umsetzung der Polyester A mit der Mischung B in einem statischen Mischer vornimmt.

9. Verwendung der biologisch abbaubaren Polyester gemäß einem der Ansprüche 1 bis 3 oder der Formmassen gemäß Anspruch 4 zur Herstellung von Formkörpern, Folien, Fasern oder Beschichtungen.

10. Formkörper, Folien, Fasern oder Beschichtungen, hergestellt unter Verwendung der biologisch abbaubaren Polyester gemäß einem der Ansprüche 1 bis 3 oder der Formmassen gemäß Anspruch 4.

## Claims

1. Biodegradable polyesters based on
A) 95 - 99.99 mol% of at least one polyester containing as monomeric building blocks
a₁) an acid component of
a₁₁) 20 - 95 mol% of at least one aliphatic or cycloaliphatic dicarboxylic acid or its ester-forming derivative and
a₁₂) 5 - 80 mol% of at least one aromatic dicarboxylic acid or its ester-forming derivative, the fractions of a₁₁ and a₁₂ each being based on the total amount of a₁₁ and a₁₂, and
a₂) at least one dihydroxy compound or at least one amino alcohol or their mixtures
and
B) 0.01 - 5 mol% of a mixture comprising
b₁) 45 - 80% by weight of at least one mononuclear isocyanurate (b₁₁) or at least one compound (b₁₂) which contains two functional groups capable of reacting with the end groups of polyester A or mixtures of b₁₁ and b₁₂,
b₂) 13 - 25% by weight of at least one binuclear isocyanurate (b₂₁) or at least one compound (b₂₂) which contains three functional groups capable of reacting with the end groups of polyester A or mixtures of b₂₁ and b₂₂,
b₃) 5 - 12% by weight of at least one trinuclear isocyanurate (b₃₁) or at least one compound (b₃₂) which contains four functional groups capable of reaction with the end groups of polyester A or mixtures of b₃₁ and b₃₂ and
b₄) 2 - 18% by weight of at least one tetra- or higher-nuclear isocyanurate (b₄₁) or mixtures of different isocyanurates (b₄₁).

2. Biodegradable polyesters as claimed in claim 1 based on
97 - 99.95 mol% of polyester A and
0.05 - 3 mol% of mixture B.

3. Biodegradable polyesters as claimed in claim 1 or 2, wherein B is an isocyanurate mixture comprising
b₁) 45 - 80% by weight of a mononuclear isocyanurate,
b₂) 13 - 25% by weight of a binuclear isocyanurate,
b₃) 5 - 12% by weight of a trinuclear isocyanurate and
b₄) 2 - 18% by weight of tetra- or higher-nuclear isocyanurates or their mixtures.

4. Molding compositions comprising biodegradable polyesters as claimed in any of claims 1 to 3 and, if desired, at least one further thermoplastic polymer or at least one further biodegradable polymer or mixtures thereof.

5. A process for preparing biodegradable polyesters, which comprises, in a first step, polyester A containing as monomeric building blocks
a₁) an acid component of
a₁₁) 20 - 95 mol% of at least one aliphatic or cycloaliphatic dicarboxylic acid or its ester-forming derivative and
a₁₂) 5 - 80 mol% of at least one aromatic dicarboxylic acid or its ester-forming derivative, the fractions of a₁₁ and a₁₂ each being based on the total amount of a₁₁ and a₁₂, and
a₂) at least one dihydroxy compound or at least one amino alcohol or their mixtures
being prepared and, in a second step, being reacted with a mixture B comprising
b₁) 45 - 80% by weight of at least one mononuclear isocyanurate (b₁₁) or at least one compound (b₁₂) which contains two functional groups capable of reacting with the end groups of polyester A or mixtures of b₁₁ and b₁₂,
b₂) 13 - 25% by weight of at least one binuclear isocyanurate (b₂₁) or at least one compound (b₂₂) which contains three functional groups capable of reaction with the end groups of polyester A or mixtures of b₂₁ and b₂₂,
b₃) 5 - 12% by weight of at least one trinuclear isocyanurate (b₃₁) or at least one compound (b₃₂) which contains four functional groups capable of reaction with the end groups of polyester A or mixtures of b₃₁ and b₃₂ and
b₄) 2 - 18% by weight of at least one tetra- or higher-nuclear isocyanurate (b₄₁) or mixtures of different isocyanurates (b₄₁),
from 95 to 99.9 mol% of polyester A and from 0.01 to 5 mol% of mixture B being reacted with one another.

6. A process as claimed in claim 5, wherein from 97 to 99.95 mol% of polyester A are reacted with from 0.05 to 3 mol% of mixture B.

7. A process as claimed in claim 5 or 6, wherein mixture B is an isocyanurate mixture comprising
b₁) 45 - 80% by weight of a mononuclear isocyanurate,
b₂) 13 - 25% by weight of a binuclear isocyanurate,
b₃) 5 - 12% by weight of a trinuclear isocyanurate and
b₄) 2 - 18% by weight of tetra- or higher-nuclear isocyanurates or their mixtures.

8. A process as claimed in any of claims 5 to 7, wherein the reaction of polyester A with mixture B is carried out in a static mixer.

9. The use of the biodegradable polyesters of any of claims 1 to 3 or of the molding compositions of claim 4 for producing moldings, films, fibers or coatings.

10. Moldings, films, fibers or coatings produced using the biodegradable polyesters of any of claims 1 to 3 or the molding compositions of claim 4.

## Revendications

1. Polyesters biologiquement dégradables, à base
A) de 95 à 99,99 moles % d'au moins un polyester, contenant comme éléments constitutifs monomères
a₁) un composant acide à base
a₁₁) de 20 à 95 moles % d'au moins un acide dicarboxylique aliphatique ou cycloaliphatique ou d'un dérivé estérogène de ce dernier, et
a₁₂) de 5 à 80moles % d'au moins un acide dicarboxylique aromatique ou d'un dérivé estérogène de celui-ci, les fractions de a₁₁ et a₁₂ se rapportant chacune à la quantité globale de a₁₁ et a₁₂, et
a₂) au moins un composé dihydroxy ou au moins un aminoalcool ou leurs mélanges,
et
B) de 0,01 à 5 moles % d'un mélange, contenant
b₁) 45 à 80% en poids d'au moins un isocyanurate monocyclique (b₁₁) ou d'au moins un composé (b₁₂), qui contient deux groupes fonctionnels qui peuvent réagir avec les groupes terminaux du polyester A ou de mélanges de b₁₁ et de b₁₂,
b₂) 13 à 25% en poids d'au moins un isocyanurate à deux cycles (b₂₁) ou d'au moins un composé (b₂₂), qui contient trois groupes fonctionnels qui peuvent réagir avec les groupes terminaux du polyester A, ou de mélanges de b₂₁ et b₂₂,
b₃) 5 à 12% en poids d'au moins un isocyanurate à trois cycles (b₃₁) ou d'au moins un composé (b₃₂) qui contient quatre groupes fonctionnels qui peuvent réagir avec les groupes terminaux du polyester A, ou de mélanges de b₃₁ et de b₃₂, et
b₄) 2 à 18% en poids d'au moins un isocyanurate à quatre cycles ou à un nombre de cycle supérieur (b₄₁) ou de mélanges de différents isocyanurates (b₄₁).

2. Polyesters biologiquement dégradables suivant la revendication 1, à base
de 97 à 99,95 moles % du polyester A, et
de 0,05 à 3 moles % du mélange B.

3. Polyesters biologiquement dégradables suivant l'une des revendications 1 et 2, dans lesquels B est un mélange d'isocyanurates contenant
b₁) 45 à 80% en poids d'un isocyanurate monocyclique,
b₂) 13 à 25% en poids d'un isocyanurate à deux cycles,
b₃) 5 à 12% en poids d'un isocyanurate à trois cycles, et
b₄) 2 à 18% en poids d'isocyanurates à quatre cycles ou à un nombre supérieur de cycles ou de leurs mélanges.

4. Masses de moulage, contenant des polyesters biologiquement dégradables suivant l'une des revendications 1 à 3 et éventuellement au moins un autre polymère thermoplastique ou au moins un autre polymère biologiquement dégradable ou leurs mélanges.

5. Procédé de préparation de polyesters biologiquement dégradables, caractérisé en ce que, dans une première étape, on prépare du polyester A, contenant, comme éléments constitutifs monomères,
a₁) un composant acide à base
a₁₁) de 20 à 95 moles % d'au moins un acide dicarboxylique aliphatique ou cycloaliphatique ou d'un dérivé estérogène de celui-ci, et
a₁₂) de 5 à 80 moles % d'au moins un acide dicarboxylique aromatique ou d'un dérivé estérogène de celui-ci, les fractions de a₁₁ et de a₁₂ se rapportant chacune à la quantité globale de a₁₁ et de a₁₂, et
a₂) au moins un composé dihydroxy ou au moins un aminoalcool ou leurs mélanges,
et en ce que, dans une deuxième étape, on le fait réagir avec un mélange B, contenant
b₁) 45 à 80% en poids d'au moins un isocyanurate monocyclique (b₁₁) ou d'au moins un composé (b₁₂), qui contient deux groupes fonctionnels qui peuvent réagir avec les groupes terminaux du polyester A, ou de mélanges de b₁₁ et de b₁₂,
b₂) 13 à 25% en poids d'au moins un isocyanurate à deux cycles (b₂₁) ou d'au moins un composé (b₂₂), qui contient trois groupes fonctionnels qui peuvent réagir avec les groupes terminaux du polyester A, ou de mélanges de b₂₁ et b₂₂,
b₃) 5 à 12% en poids d'au moins un isocyanurate à trois cycles (b₃₁) ou d'au moins un composé (b₃₂) qui contient quatre groupes fonctionnels qui peuvent réagir avec les groupes terminaux du polyester A, ou de mélanges de b₃₁ et de b₃₂, et
b₄) 2 à 18% en poids d'au moins un isocyanurate à quatre cycles ou à un nombre de cycles supérieur (b₄₁) ou de mélanges de différents isocyanurates (b₄₁),
de 95 à 99,9 moles % de polyester A et de 0,01 à 5 moles % du mélange B étant mis à réagir l'un avec l'autre.

6. Procédé de préparation de polyesters biologiquement dégradables suivant la revendication 5, caractérisé en ce qu'on fait réagir 97 à 99,95 moles % de polyester A avec 0,05 à 3 moles % du mélange B.

7. Procédé de préparation de polyesters biologiquement dégradables suivant l'une des revendications 5 et 6, caractérisé en ce que, comme mélange B, on utilise un mélange d'isocynurates contenant
b₁) 45 à 80% en poids d'un isocyanurate monocyclique,
b₂) 13 à 25% en poids d'un isocyanurate à deux cycles,
b₃) 5 à 12% en poids d'un isocyanurate à trois cycles, et
b₄) 2 à 18% en poids d'isocyanurates à quatre cycles ou à un nombre supérieur de cycles ou de leurs mélanges.

8. Procédé suivant l'une des revendications 5 à 7, caractérisé en ce qu'on effectue la réaction du polyester A avec le mélange B dans un mélangeur statique.

9. Utilisation des polyesters biologiquement dégradables suivant l'une des revendications 1 à 3 ou des masses de moulage suivant la revendication 4, pour la préparation de corps façonnés, de feuilles, de fibres ou de revêtements.

10. Corps façonnés, feuilles, fibres ou revêtements préparés par l'utilisation des polyesters biologiquement dégradables suivant l'une des revendications 1 à 3 ou des masses de moulage suivant la revendication 4.
